(19) Europäisches Patentamt

European Patent Office

Office européen des brevets

(11) EP 0 437 648 B1

(12) **EUROPEAN PATENT SPECIFICATION**

(45) Date of publication and mention
of the grant of the patent:
**10.04.1996 Bulletin 1996/15**

(51) Int. Cl.$^6$: **B41F 33/00**, G01N 21/86

(21) Application number: **90100741.9**

(22) Date of filing: **15.01.1990**

(54) **Quality inspection method for a printed matter**

Verfahren zur Qualitätsbeurteilung von Druckerzeugnissen

Méthode pour inspecter la qualité de matière imprimée

(84) Designated Contracting States:
**CH DE GB LI**

(43) Date of publication of application:
**24.07.1991 Bulletin 1991/30**

(73) Proprietor: **MITSUBISHI JUKOGYO KABUSHIKI KAISHA**
**Tokyo 100 (JP)**

(72) Inventor: **Aso, Itsuo, c/o Mihara Machinery Works**
**Mihara-shi, Hiroshima-ken (JP)**

(74) Representative: **Henkel, Feiler, Hänzel & Partner**
**Möhlstrasse 37**
**D-81675 München (DE)**

(56) References cited:
**DE-B- 2 917 519**     **GB-A- 2 066 949**
**US-A- 3 756 725**     **US-A- 3 970 393**

• DE-A 2 752 412
• EP-A 0 194 331

## Description

BACKGROUND OF THE INVENTION:

Field of the Invention:

The present invention relates in general to a quality inspection method for a printed matter, and more particularly to a method for setting a reference value available in detection of white damage and/or black damage caused by shortage and/or surplus of ink feed upon commencement of printing and a method for detecting the white damage and/or the black damage.

This method is also applicable to detection of defective printing of a pattern such as figures, characters and the like on a printed matter and various contaminations occurring on a printed matter in quality inspection for a printed matter.

Description of the Prior Art:

Heretofore, with regard to inspection of a printed matter, a method of performing inspection by relying upon human visual sense on an off-line basis was a principal trend. This is due to the fact that printed matters have different print patterns for every piece, and that it has been believed that inspection items for printed matters call a delicate difference that must rely upon human visual sense in question. On the other hand, in response to the requirement that it is wanted to evaluate a printed matter during printing, trials of making judgement after converting an image on a printed matter during printing into a stationary image by effecting stroboscopic illumination synchronized with a printing speed or by employing a rotary mirror rotating synchronously at a high speed, were carried out. However, even these measures were not the system of such class that it can be called inspection machine in the point that the inspection also relied upon human visual sense. In addition, another trial that a color patch is printed simultaneously with a print pattern of a printed matter and inspection of the printed matter is simulated by performing inspection of the color patch, has been also carried out. However, according to this method, in the event that printing faults (oil dropping, contamination, etc.) should arise in the pattern area, they would be overlooked, and so, it could not be said that a function of an inspection machine is fully achieved.

On the other hand, as seen in the "printed matter inspection apparatus" proposed recently in JP-A-56-98634 (1981) or JP-A-59-109832 (1984), a system for performing inspection of a printed matter on an in-line basis by making use of a line sensor has been proposed (cf. also GB-A-2 066 949 and EP-A-0 194 331). An outline of this system will be explained with reference to Fig. 5.

A web-like printing paper sheet 3 fed from a roll paper 2 mounted in a feeder section of a printing machine is, after printed in a printing section 1, conveyed to a dryer and a folding machine (not shown). In a printed matter inspection apparatus, in order to inspect a printed condition after printing, pattern information is taken out through a line sensor in a detecting section 4 into a processor circuit 6 while controlling timing for sampling by means of a rotary encoder 5 mounted to the printing section, and a judgement work is effected. As a result, it becomes possible that if the printed condition has been judged to be abnormal, the apparatus can respond to the judgement by means of alarm, marking, reject and the like.

According to the above-described system, since an entire pattern area of a printed matter can be automatically inspected on an in-line basis, the previously described shortcomings are not present, an advantage as an inspection apparatus can be expected.

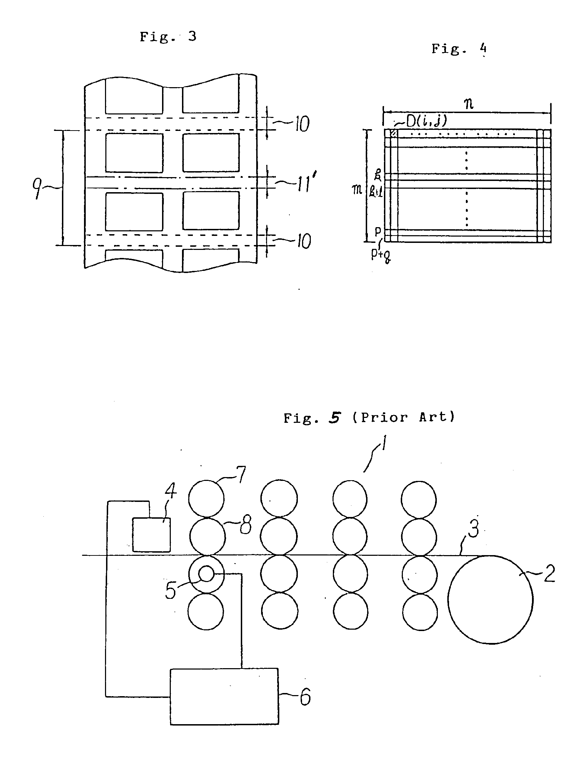

In Fig. 5, the image information input through the detecting section 4 achieves double roles as reference information and as inspection information within the processor circuit 6. The reference information means image information of a pattern on a printed matter at the time point when an operator has judged that printing is normal, and this image information is stored within a reference information memory to be used as a reference for inspection. On the other hand, the inspection information means information input from the detecting section 4 after the reference information was stored in the memory, which is compared with the above-described reference information, whether the printed matter is acceptable or not is determined by judging whether or not the difference between them has exceeded a preset allowable limit, and thereby inspection of a printed matter on an in-line basis becomes possible.

It will be understood that as a result, according to the above-mentioned system, before input of the reference information, that is, during the period when printing proceeds from commencement of printing up to normal printing, inspection would be impossible.

In practical printing, since unacceptable printed matters would occur in large amount during the period when printing proceeds from commencement of printing to a normal printing state, and especially in a rotary press since loss of printing paper is large, there is the desire that after commencement of printing it is wanted to automatically judge at what time point printing has shifted to normal printing. It is obvious that the printed matter inspecting apparatus according to the above-described prior invention is not effective at all for this desire, and solution for this problem has been desired.

In addition, according to the above-described system shown in Fig. 5, while it becomes possible to inspect an entire pattern on a printed matter, the reference information and the inspection information to be processed amount to a large information content. Hence, the inspection apparatus in the prior art was complicated in structure, slow in inspection speed or insufficient in inspection accuracy.

Prior art document GB-A-2 066 949 discloses a quality inspection method for a printed matter, wherein from momentarily changing detection signals obtained by optically scanning with a multi-channel optical detecting device a travelling printed matter detection signals are extracted to be used as a reference signal, and anomalies occuring in said printed matter are detected by comparing the momentarily changing detection signals with the reference signal.

Further prior art document EP-A-0 194 331 discloses a print quality inspection method for a printed matter, wherein a print pattern on the printed matter is scanned by a multi-channel optical detecting device and density level and spectral characteristic data are obtained.

Anomalies occurring in the printed matter are detected by comparing detection signals obtained by optically scanning the printed matter with reference signals which were preliminarily scanned from a "normal printed matter" and stored.

SUMMARY OF THE INVENTION:

The present invention has been worked out in order to resolve the above-mentioned problems in the prior art, and it is an object of the present invention to provide a reference information present method for feeding reference information for inspection to a printed matter inspection apparatus so that inspection of a printed matter can be carried out from immediately after commencement of printing, and a method for detecting decoloring (white damage) caused by shortage of ink feed to a printed matter upon commencement of printing or contamination of a background (black damage) caused by surplus of ink feed.

Another object of the present invention is to provide a quality inspection method for a printed matter for inspecting print depth variations on a printed matter at a sufficient inspection accuracy and at a sufficiently high inspection speed by making use of an apparatus having a relatively simple structure.

To solve this object the present invention provides a method as specified in claim 1 or claim 3.

In a quality inspection method for a printed matter, a print pattern on the printed matter is optically imaged on photo-sensitive elements and a print depth of the printed matter is detected by taking out intensities of light inciding to the respective photo-sensitive elements as electrical quantities. From momentarily changing detection signals obtained by optically scanning a traveling printed matter, detection signals generated in a particular area are extracted to be used as a reference signal, and anomalies occured in the printed matter are detected by comparing the momentarily changing detection signals with the reference signal. Among the detection signals, those generated from an unprinted area are used as the reference signal, and detection signals generated from a printed area are compared with this reference signal.

Among the detection signals, those generated from an unprinted area are used as the reference signal, and detection signals generated from a non-pattern area are compared with this reference signal.

A print pattern on a printed matter is optically imaged on photo-sensitive elements and a print depth of the printed matter is detected by taking out intensities of light incident to the respective photo-sensitive elements as electrical quantities. Anomalies occurred in the printed matter are detected by comparing detection signals obtained by optically scanning print depth variations in an ink key width unit of the printed matter with detection signals from a normal printed matter which were preliminarily detected through a similar method to the above method and stored for use as a reference signal.

In other words, setting of reference information during the period when printing proceeds from commencement of printing up to normal printing is carried out by determining a normal area of a printed matter among inspection information possessed by the processor circuit 6 in Fig. 5 and using the information obtained from the determined particular area as reference information.

Next, detection of white damage (decoloring caused by shortage of ink feed which is generated entirely or partly on the printed paper surface) and/or black damage (contamination of a background caused by surplus of ink feed which is generated entirely or partly on the printed paper surface) during the period when printing proceeds from commencement of printing up to normal printing, is effected by comparing inspection information of a traveling printed matter with reference information obtained from the same inspection information, and determining that the printed matter involves white damage when a difference less than a predetermined value exists.

Also, from the reference information possessed by the processor circuit 6 in Fig. 5, a portion in a printed matter where print depth variation is liable to occur is extracted and this is used as reference data. A portion corresponding to this is extracted from inspection information and is used as inspection data. And by comparing the reference data with the inspection data, defects in quality of the printed matter are determined.

In the above-mentioned process of presetting reference information, image information of a traveling printed matter is input moment by moment to the processor circuit 6 shown in Fig. 5, and accumulated as inspection information in an inspection information memory. Among this inspection information, detection data for a printing paper itself in an unprintable area of a printed matter, that is, in an unprinted area are extracted to be used as reference information.

Next, in the above-described white damage inspection method, the inspection information is divided for the respective ink control widths, that is, for the respective print widths for which ink feed rates can be controlled by means of ink keys, and with respect to the respective divided widths the detection data are compared with the above-mentioned reference information, and when a difference less than a predetermined value exists, the printed matter is determined to involve white damage.

Also, in the above-described black damage inspection method, among the inspection information, detection data for a non-pattern section in the printed area (the portion where a printed pattern is not present though printing is possible) are compared with the above-mentioned reference information, and when a difference larger than a predetermined value exists, the printed matter is determined to be unacceptable.

Through the above-mentioned method, even under the condition where a normal printed matter is not present upon commencement of printing, detection of white damage and/or black damage from only momentary inspection information becomes possible.

Furthermore, in the inspection method, image information of a traveling printed matter is accumulated in the processor circuit 6 in Fig. 5. The processor circuit 6 involves reference information storing a pattern on a normal printed matter and inspection information storing momentary pattern on a printed matter. The depth variation of ink is caused by shortage or surplus of an amount of ink fed to a plate drum 8 as controlled by ink keys (not shown) provided in a printing section 1 in Fig. 5. Accordingly, print depth variations could be detected for the respective widths of the ink keys controlling the amount of ink.

Therefore, the above-mentioned reference information is divided so as to correspond to the respective ink keys, and in the respective blocks of reference information, representative informations are extracted to produce the reference data. In addition with respect to the inspection information also, portions corresponding to the reference data are extracted to produce inspection data. The above-mentioned reference data and inspection data are compared with each other, and when a difference larger than a predetermined value is present, the printed matter is determined to be unacceptable in print depth.

The above-mentioned and other objects, features and advantages of the present invention will become more apparent by reference to the following description of preferred embodiments of the invention taken in conjunction with the accompanying drawings.

BRIEF DESCRIPTION OF THE DRAWINGS:

In the accompanying drawings:

Fig. 1 is a schematic view of a printed matter that is relevant to a first preferred embodiment of the present invention;
Fig. 2 is a schematic view showing a memory array for inspection information corresponding to one page in the printed matter shown in Fig. 1;
Fig. 3 is a schematic view of a printed matter that is relevant to a second preferred embodiment of the present invention;
Fig. 4 is a schematic view showing a memory array for inspection information corresponding to one page in the printed matter shown in Fig. 3; and

Fig. 5 is a general view showing a system of an inspection apparatus in the prior art.

DESCRIPTION OF THE PREFERRED EMBODIMENT:

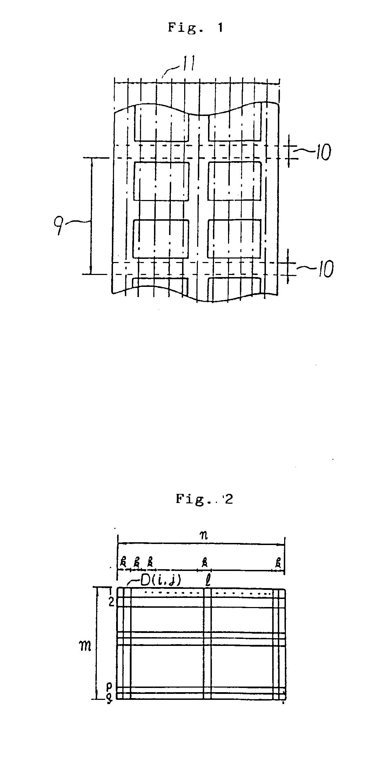

At first, description will be made on a first preferred embodiment of the present invention with reference to Figs. 1, 2 and 8.

In Fig. 1 showing an outline of a printed matter, one page 9 is a print unit corresponding to one revolution of a plate drum 8 or a rubber drum 7. An unprinted section 10 is a portion that is unprintable due to influence of a gap on the plate drum 8 or the rubber drum 7. An ink control width 11 corresponds to a width of an ink key (not shown) for controlling an amount of ink fed to the plate drum 7 in the printing section 1 in Fig. 5.

Fig. 2 shows one example of a memory array for pattern information, that is, inspection information corresponding to one page 9 in Fig. 1, which has been input to the processor circuit 6 in Fig. 5.

In Fig. 2, in the widthwise direction of the paper sheet the area is divided into $\underline{n}$ depending upon a number of detector elements provided in a line camera or the like in a detector section 4, and in the traveling direction the area is divided into $\underline{q}$ depending upon sampling timing of a rotary encoder 5. Accordingly, inspection information corresponding to one page is composed of $\underline{q} \times \underline{n}$ picture elements.

Here it is assumed that the ink control width 11 is composed of $\underline{k}$ columns, and in the width of the printing paper are present N ink control widths.

Also, it is assumed that the memory array corresponding to an unprinted section 10 consists of the p-th to q-th rows.

Here, inspection information for any arbitrary picture element in the i-th row and in the j-th column of the memory array is represented by D (i, j), and one column is arbitrarily selected from each ink control width 11.

For instance, if an average of one picture element in the ink control width corresponding to the $\ell$-th column is represented by $DT_\ell$, then $DT_\ell$ can be represented by the following formula:

$$DT_\ell = \sum_{i=1}^{p-1} D\,(i,\,\ell)/(p\text{-}1) \qquad (1)$$

Also, if an average of one picture element of inspection information in the $\ell$-th column in the unprinted section 10 is represented by $NR_\ell$, then $NR_\ell$ can be represented by the following formula:

$$NR_\ell = \sum_{i=p}^{q} D\,(i,\,\ell)/(q\text{-}p\text{+}1) \qquad (2)$$

In the case where black damage is occurring due to contamination of a background of a printed matter or the like upon commencement of printing, or during normal printing when ink is being transferred to the printed section, $DT_\ell \neq NR_\ell$ is fulfilled. In the event that an amount of ink feed has become short due to an ink key corresponding to the $\ell$-th column, that is, upon occur-

rence of white damage, $DT_\ell$ would approach $NR_\ell$. Hence, if a latitude for one picture element that is allowed for a normal printed matter is represented by $\varepsilon$, then when the following relation is fulfilled, a traveling printed matter can be judged to have white damage:

$$| DT_\ell - NR_\ell | \leq \varepsilon \qquad (3)$$

The comparison represented by the formula (3) above is carried out for all the ink control widths. This latitude $\varepsilon$ can be preliminarily measured through experiments or the like, and it could be preset in the processor circuit 6.

According to the present invention, without necessitating to preliminarily input reference information of a normal printed matter, on the basis of only inspection information of a traveling printed matter, inspection for white damage upon commencement of printing becomes possible.

Here, the unit of comparison between the ink control width 11 and the unprinted section 10 could be two columns or more, and any one column of the ink control width 11 may be divided into N to compare for each block.

Next, a second preferred embodiment of the present invention will be explained with reference to Figs. 3, 4 and 5.

In Fig. 3 showing an outline of a printed matter, one page 9 is a print unit corresponding to one revolution of a plate drum 8 or a rubber drum 7 in Fig. 8. An unprinted section 10 is a portion that is unprintable due to influence of a gap on the plate drum 8 or the rubber drum 7.

And, a non-pattern section 11' is a portion where a pattern is not present and ink is not transferred even if printing is effected as a result of layout of patterns. Accordingly, in normal printing this non-pattern section 11' have the color of the printing paper similarly to the unprinted section.

Fig. 4 shows one example of a memory array for pattern information, that is, inspection information corresponding one page 9 in Fig. 3 which has been input to the processor circuit 6 in Fig. 5.

In Fig. 4, in the widthwise direction of the paper sheet the area is divided into $\underline{n}$ depending upon a number of detector elements provided in a line camera or the like in a detector section 4, and in the traveling direction the area is divided into $\underline{q}$ depending upon sampling timing of a rotary encoder 5. Accordingly, inspection information corresponding to one page is composed of $\underline{q} \times \underline{n}$ picture elements.

Here it is assumed that the memory array corresponding to the non-pattern section 11' in Fig. 3 consists of the $\underline{k}$-th to $\underline{\ell}$-th rows in Fig. 4.

Also it is assumed that the memory array corresponding to the unprinted section consists of the $\underline{p}$-th to $\underline{q}$-th rows.

Here, if any arbitrary picture element in the $\underline{i}$-th row and in the $\underline{j}$-th column of the memory array is represented by $D (i, j)$, then a sum $ND_k$ of the inspection information in the $\underline{k}$-th row in the non-pattern section is represented by the following formula:

$$ND_k = \sum_{j=1}^{n} D (k, j) \qquad (4)$$

Also, a sum $NR_p$ of the inspection information in the $\underline{p}$-th row in the unprinted section is represented by the following formula:

$$NR_p = \sum_{j=1}^{n} D (p, j) \qquad (5)$$

The portion where black damage occurs due to contamination of a background of a printed matter upon commencement of printing is only the non-pattern section, and for the values represented by the formulae (4) and (5), $ND_k \neq NR_p$ is fulfilled.

As the printing become close to normal printing, $ND_k$ would approach $NR_p$.

Hence, if an error corresponding to one row that is allowed for a normal printed matter is represented by $\varepsilon$, then when the following relation is fulfilled, a traveling printed matter can be judged not to have black damage:

$$| ND_k - NR_p | \leq \varepsilon \qquad (6)$$

The allowable error $\varepsilon$ can be preliminarily measured through experiments or the like, and it could be preset in the processor circuit 6.

According to the present invention, without necessitating to preliminarily input reference information of a normal printed matter, on the basis of only inspection information of a traveling printed matter, inspection for black damage upon commencement of printing becomes possible.

Here, the unit of comparison between the non-pattern section 11 and the unprinted section 10 could be every row, and if the non-pattern section 11 and the unprinted section 10 have the same area, that is, if $\ell - k = q - p$ is fulfilled, the total sums in the respective sections could be compared.

More particularly, if the total sum of the inspection information in the non-pattern section is represented by ND, it is given by the following formula:

$$ND = \sum_{i=k}^{\ell} \sum_{j=1}^{n} D (i, j) \qquad (7)$$

if the total sum of the inspection information in the unprinted section is represented by NR, it is given by the following formula:

$$NR = \sum_{i=p}^{q} \sum_{j=1}^{n} D (i, j) \qquad (8)$$

and if the latitude for the total sum is represented by $\varepsilon$, when the following relation is fulfilled, the printed matter can be judged not to involve black damage:

$$| ND - NR | \leq \varepsilon \qquad (9)$$

Otherwise, the inspection information of one row consisting of n elements is divided into N blocks, and comparison could be made by presetting latitude values for the respective blocks.

In a quality inspection method for a printed matter of the type that a print pattern on the printed matter is optically imaged on photo-sensitive elements and a print depth of the printed matter is detected by taking out intensities of light inciding to the respective photo-sensitive elements as electrical quantities, owing to the fact that from momentarily changing detection signals obtained by optically scanning a traveling printed matter, detection signals generated in a particular area are extracted to be used as a reference signal, and anomalies occurred in the printed matter are detected by comparing the momentarily changing detection signals with the reference signal, the present invention provides the following advantages:

(1) Quality inspection of a printed matter during the period from commencement of printing up to normal printing, which was impossible or quite ineffective by means of a printed matter inspection apparatus in the prior art, can be carried out.
(2) Inspection for white damage and/or black damage by numerical management having a predetermined reference and not relying upon the sixth sense based on the visual sense of a printed matter inspector, becomes possible.
(3) Transfer from unacceptable printing caused by white damage and/or black damage to normal printing is effected smoothly, and waste printing paper is reduced.

In a quality inspection method for a printed matter of the type that a print pattern on the printed matter is optically imaged on photo-sensitive elements and a print depth of the printed matter is detected by taking out intensities of light inciding to the respective photo-sensitive elements as electrical quantities, owing to the fact that anomalies occurred in the printed matter are detected by comparing detection signals obtained by optically scanning print depth variations in an ink key width unit of the printed matter with detection signals from a normal printed matter which were preliminarily detected through a similar method to the above method and stored for use as reference signals, the present invention also provides the following advantages:

(1) Inspection of print depth variations of a pattern over the entire printed matter through a small number of comparative inspections, becomes possible, and also it is possible to improve an inspection speed.
(2) Since the inspection depends upon numerical management without relying upon the sixth sense based on the visual sense of a printed matter inspector, print depth inspection not relying upon an inspector but having a fixed reference, becomes possible.
(3) Print depth variations occurring during printing can be detected, hence it is possible to quickly deal with generated printing faults, and waste printing paper is reduced.

**Claims**

1. A quality inspection method in a quality inspection apparatus for a printed matter, comprising the steps:

   a) optically scanning a travelling printed matter with photo sensitive elements;
   b) generating inspection information of one page of said printed matter corresponding to one revolution of a plate drum or a rubber drum, wherein the inspection information is divided in the widthwise direction of the page into n depending upon a number of the photo sensitive elements and in the travelling direction into q depending upon a sampling time of a rotary encoder, so that the inspection information in a memory array is composed of q x n picture elements and the inspection information for any arbitrary picture element in the i-th row and the j-th column of the memory array is represented by $D(i,j)$;
   c) determining that the 1-st to (p-1)-th row of said memory array correspond to a printed section and that the p-th to q-th row of said memory array correspond to an unprinted section which is a unprintable portion of said page due to a gap of the plate drum or the rubber drum;
   d) determining for the l-th column of the printed section of the memory array a first mean picture element ($DT_l$) by the following formula:

   $$DT_l = \sum_{i=1}^{p-1} D(i, l)/(p-1);$$

   e) determining for the l-th column of the unprinted section of the memory array a second mean picture element ($NR_l$) by the following formula:

   $$NR_l = \sum_{i=p}^{q} D(i, l)/(q-p+1);$$

   f) determining for the l-th row that a damage of the printed matter is occurring when the absolute value of the difference of the first mean picture element and the second mean picture element is not greater than a predetermined value ($\varepsilon$) or when the first mean picture element is equal to the second mean picture element.

2. A quality inspection method in a quality inspection apparatus for a printed matter as claimed in claim 1 further comprising the step:

carrying out the steps d) - f) for all columns of the memory array.

3. A quality inspection method in a quality inspection apparatus for a printed matter, comprising the steps:

a) optically scanning a travelling printed matter with photo sensitive elements;
b) generating inspection information of one page of said printed matter corresponding to one revolution of a plate drum or a rubber drum, wherein the inspection information is divided in the widthwise direction of the page into n depending upon a number of the photo sensitive elements and in the travelling direction into q depending upon a sampling time of a rotary encoder, so that the inspection information in a memory array is composed of q x n picture elements and the inspection information for any arbitrary picture element in the i-th row and the j-th column of the memory array is represented by $D(i,j)$;
c) determining that the k-th to l-th row of said memory array correspond to a non-pattern section, which is a portion of said page where a pattern is not present, and that the p-th to q-th row of said memory array correspond to an unprinted section which is a unprintable portion of said page due to a gap of the plate drum or the rubber drum;
d) determining for the k-th row of the non-pattern section of the memory array a first picture element sum ($ND_k$) by the following formula:

$$ND_k = \sum_{j=1}^{n} D(k, j);$$

e) determining for the p-th row of the unprinted section of the memory array a second picture element sum ($NR_p$) by the following formula:

$$NR_p = \sum_{j=1}^{n} D(p, j);$$

f) determining that a damage of the printed matter is occurring when the absolute value of the difference of the first picture element sum and the second picture element sum is greater than a predetermined value ($\varepsilon$).

## Patentansprüche

1. Qualitätsinspektionsverfahren in einem Qualitätsinspektionsgerät für Druckschriftsätze bzw. Druckerzeugnisse, das die folgenden Schritte enthält:

a) optisches Abtasten eines laufenden bzw. sich fortbewegenden Druckschriftsatzes mit photosensitiven Elementen;
b) Erzeugen von Inspektionsinformation einer Seite des Druckschriftsatzes entsprechend einer Drehung einer Blech- oder Gummitrommel, wobei die Inspektionsinformation in Breitenrichtung der Seite abhängig von der Anzahl der photosensitiven Elemente n-fach und in Laufrichtung abhängig von einer Abtastzeit eines Drehcodierers q-fach unterteilt ist, so daß die Inspektionsinformation in einem Speicherfeld sich aus q x n Bildelementen zusammensetzt und die Inspektionsinformation für jedes beliebige Bildelement in der i-ten Reihe und der j-ten Spalte des Speicherfelds durch $D(i, j)$ wiedergegeben ist;
c) Festlegen, daß die erste bis zur (p-1)-ten Reihe des Speicherfelds einem gedruckten Teil entspricht und daß die p-te bis zur q-ten Reihe des Speicherfelds einem nicht gedruckten Teil entspricht, der einen nicht druckbaren Abschnitt der Seite infolge eines Spalts der Blech- oder Gummitrommel darstellt;
d) Festlegen eines ersten Durchschnittsbildelements ($DT_l$) für die erste Spalte des gedruckten Teils des Speicherfelds durch die folgende Formel:

$$DT_1 = \sum_{i=1}^{p-1} D(i, 1) / (p - 1);$$

e) Festlegen eines zweiten Durchschnittsbildelements ($NR_l$) für die erste Spalte des nicht gedruckten Teils des Speicherfelds durch die folgende Formel:

$$NR_1 = \sum_{i=p}^{q} D(i, 1) / (q - p + 1);$$

f) Festlegen, daß für die erste Reihe eine Beschädigung des Druckschriftsatzes auftritt, wenn der Absolutwert der Differenz des ersten Durchschnittsbildelements und des zweiten Durchschnittsbildelements nicht größer als ein vorbestimmter Wert ($\varepsilon$) ist, oder wenn das erste Durchschnittsbildelement gleich dem zweiten Durchschnittsbildelement ist.

2. Qualitätsinspektionsverfahren in einem Qualitätsinspektionsgerät für Druckschriftsätze nach Anspruch 1, das weiterhin den Schritt enthält:
Ausführen der Schritte d) - f) für alle Spalten des Speicherfelds.

3. Qualitätsinspektionsverfahren in einem Qualitätsinspektionsgerät für Druckschriftsätze bzw. Druckerzeugnisse, das die folgenden Schritte enthält:

a) optisches Abtasten eines laufenden bzw. sich fortbewegenden Druckschriftsatzes mit photosensitiven Elementen;
b) Erzeugen von Inspektionsinformation einer Seite des Druckschriftsatzes entsprechend einer Drehung einer Blech- oder Gummitrommel, wobei die Inspektionsinformation in Breitenrichtung der Seite abhängig von der Anzahl der photosensitiven Elemente n-fach und in Laufrichtung abhängig von einer Abtastzeit eines Drehcodierers q-fach unterteilt ist, so daß die Inspektionsinformation in einem Speicherfeld sich aus q x n Bildelementen zusammensetzt und die Inspektionsinformation für jedes beliebige Bildelement in der i-ten Reihe und der j-ten Spalte des Speicherfelds durch D(i, j) wiedergegeben ist;

c) Festlegen, daß die k-te bis zur l-ten Reihe des Speicherfelds einem Nicht-Bild(Muster-)teil entspricht, der einen Abschnitt der Seite darstellt, in dem kein Bild (Muster) vorhanden ist, und daß die p-te bis zur q-ten Reihe des Speicherfelds einem nicht gedruckten Teil entspricht, der einen nicht druckbaren Teil der Seite infolge eines Spalts der Blech- oder Gummitrommel darstellt;

d) Festlegen einer ersten Bildelementsumme ($ND_k$) für die k-te Reihe des Nicht-Bild(Muster-)teils des Speicherfelds durch die folgende Formel:

$$ND_k = \sum_{j=1}^{n} D(k, j);$$

e) Festlegen einer zweiten Bildelementsumme ($NR_p$) für die p-te Reihe des nicht gedruckten Teils des Speicherfelds durch die folgende Formel:

$$NR_p = \sum_{j=1}^{n} D(p, j);$$

f) Festlegen, daß eine Beschädigung des Druckschriftsatzes auftritt, wenn der Absolutwert der Differenz der ersten Bildelementsumme und der zweiten Bildelementsumme größer als ein vorbestimmter Wert ($\varepsilon$) ist.

## Revendications

1. Un procédé d'inspection de qualité dans un appareil d'inspection de qualité pour une matière imprimée, comportant les phases consistant à :

a) analyser optiquement une matière imprimée en déplacement à l'aide d'éléments photosensibles ;

b) engendrer une information d'inspection d'une page de ladite matière imprimée correspondant à un tour d'un tambour à plaque ou d'un tambour caoutchouc, l'information d'inspection étant divisée, dans la direction de la largeur de la page, en n, selon le nombre des éléments photosensibles et, dans la direction de déplacement, en q, selon la durée d'échantillonnage d'un codeur tournant, de sorte que l'information d'inspection, dans une matrice de mémoire, est composée de q x n éléments d'image et que l'information d'inspection pour un élément d'image arbitraire quelconque dans la ième ligne et dans la jième colonne de la matrice de mémoire est représentée par D(i,j) ;

c) déterminer que les 1ère à (p-1)ème lignes de ladite matrice de mémoire correspondent à une partie imprimée et que les p-ième à q-ième lignes de ladite matrice de mémoire correspondent à une partie non imprimée qui est une partie non imprimable de ladite page en raison d'un espace du tambour à plaque ou du tambour caoutchouc ;

d) déterminer pour la 1ère colonne de la partie imprimée de la matrice de mémoire un premier élément d'image moyen ($DT_\ell$) par la formule suivante :

$$DT_\ell = \sum_{i=1}^{p-1} D(i, \ell)/(p-1);$$

e) déterminer pour la 1ère colonne de la partie non imprimée de la matrice de mémoire un second élément d'image moyen ($NR_\ell$) par la formule suivante :

$$NR_\ell = \sum_{i=p}^{q} D(i, \ell)/(q-p+1);$$

f) déterminer pour la 1ère ligne qu' un endommagement de la matière imprimée se produit lorsque la valeur absolue de la différence entre le premier élément d'image moyen et le second élément d'image moyen n'est pas supérieure à une valeur prédéterminée($\varepsilon$)ou lorsque le premier élément d'image moyen est égal au second élément d'image moyen.

2. Un procédé d'inspection de qualité dans un appareil d'inspection de qualité pour une matière imprimée tel que revendiqué dans la revendication 1, comportant au surplus la phase consistant à :

effectuer les phases d)-f)pour toutes les colonnes de la matrice de mémoire.

3. Un procédé d'inspection de qualité dans un appareil d'inspection de qualité pour une matière imprimée, comportant les phases consistant à :

a) analyser optiquement une matière imprimée en déplacement à l'aide d'éléments photosensibles ;

b) engendrer une information d'inspection d'une page de ladite matière imprimée correspondant à un tour d'un tambour à plaque ou d'un tambour caoutchouc, l'information d'inspection étant divisée, dans la direction de la largeur de la page, en n, selon le nombre des éléments photosensibles et, dans la direction de déplacement, en q, selon la durée d'échantillonnage d'un codeur tournant, de sorte que l'information d'inspection, dans une matrice de mémoire, est composée de q x n éléments d'image et que l'information d'inspection pour un élément d'image arbitraire quelconque dans la ième ligne et dans la jième colonne de la matrice de mémoire est représentée par D(i,j) ;

c) déterminer que les k-ième à l-ième rangées de ladite matrice de mémoire correspondent à une partie sans motif, qui est une partie de ladite page dans laquelle un motif n'est pas présent, et que les p-ième à q-ième lignes de ladite matrice de mémoire correspondent à une partie non imprimée, qui est une partie non imprimable de ladite page en raison d'un espace du tambour à plaque ou du tambour caoutchouc ;

d) déterminer pour la k-ième ligne de la partie sans motif de la matrice de mémoire une première somme d'éléments d'image ($ND_k$) par la formule suivante :

$$ND_k = \sum_{j=1}^{n} D(k, j) \;;$$

e) déterminer pour la p-ième ligne de la partie non imprimée de la matrice de mémoire une seconde somme d'éléments d'image ($NR_p$) par la formule suivante :

$$NR_p = \sum_{j=1}^{n} D(p, j) \;;$$

f) déterminer qu'un endommagement de la matière imprimée se produit lorsque la valeur absolue de la différence entre la première somme d'éléments d'image et la seconde somme d'éléments d'image est supérieure à une valeur prédéterminée ($\varepsilon$).

Fig. 1

Fig. 2

Fig. 3

Fig. 4

Fig. *5* (Prior Art)